# FASCICULE DE BREVET EUROPEEN

(11) **EP 1 430 711 B1**
(45) Date de publication et mention de la délivrance du brevet: **18.03.2009**
(21) Numéro de dépôt: 02765229.6
(22) Date de dépôt: 10.09.2002
(51) Int. Cl.: H04N 5/00, H04N 7/24

(54) **METHODE DE DIFFUSION DE DONNEES ENTRE UN SERVEUR LOCAL ET DES PERIPHERIQUES LOCAUX**
VERFAHREN ZUR DATENÜBERMITTLUNG ZWISCHEN EINEM LOKALEM SERVER UND LOKALEN KLIENTEN
METHOD FOR DATA BROADCAST BETWEEN A LOCAL SERVER AND LOCAL PERIPHERALS

(30) Priorité: 12.09.2001 CH 16822001
(43) Date de publication de la demande: 23.06.2004
(73) Titulaire: Nagravision SA, 1033 Cheseaux-sur-Lausanne (CH)
(72) Inventeur: ROBERT, Arnaud, CH-3005 Berne (CH)
(74) Mandataire: Wenger, Joel-Théophile
(86) Numéro de dépôt international: PCT/IB2002/003739
(87) Numéro de publication internationale: WO 2003/024092

(56) Documents cités:
- EP-A- 0 969 665
- EP-A- 0 977 438
- WO-A-00/13412
- WO-A-01/50225
- WO-A-01/61680

## Description

La présente invention est du domaine de la distribution d'informations sous forme électronique en particulier dans le cas où ces informations sont soumises à des conditions d'utilisation.

Les informations peuvent être de plusieurs types, tels que de type audio/vidéo, musical, programme ou jeu.

Ces informations sont diffusées sous forme encryptées afin d'en contrôler la diffusion. Elles peuvent être également téléchargées depuis Internet ou disponibles sur un support portable tel que CD-ROM ou DVD.

Le problème sur lequel se penche la présente invention concerne la diffusion de ou des clés de décryption de ces informations.

Selon une manière connue en particulier dans le domaine de la diffusion de contenus vidéo, la ou les clés sont encryptées par une clé secrète contenue dans une unité de sécurité réputée inviolable. Ainsi les informations sont reçues par l'unité multimédia désireuse de les utiliser à laquelle est connectée l'unité de sécurité. L'unité multimédia transfère à l'unité de sécurité le message comprenant la clé relative aux informations. Cette dernière vérifie que le possesseur de l'unité de sécurité dispose des droits pour décrypter les informations.

Dans l'affirmative, cette unité de sécurité décrypte la clé et la retourne à l'unité multimédia pour que cette dernière décrypte les informations.

Cette méthode donne satisfaction pour une utilisation des informations ou données dans l'unité multimédia tel que dans un récepteur de télévision à péage. Une fois en clair, les données sont visualisées par le téléviseur.

Cette méthode n'est pas adaptée à l'utilisation de ces mêmes données par des périphériques domestiques. Par périphériques domestiques, on entend tous les périphériques connectés à l'unité multimédia dans une limite géographique restreinte telle qu'un domicile. Ces périphériques peuvent être un ordinateur personnel, un enregistreur vidéo numérique, un PALM-TOP ou autre enregistreur MP3, un téléphone mobile ou autre système mobile de lecture multimédia.

Dans cette configuration, l'unité multimédia fait office de serveur local pour les différents périphériques et le problème se pose lorsqu'il est question de transférer les données encryptées ou décryptées de cette unité vers l'un des périphériques.

Selon l'exemple décrit ci-dessus, cette fonction est tout simplement interdite car elle ouvre la voie à une diffusion à d'autres utilisateurs sans que le fournisseur des données puisse en contrôler l'accès.

Selon un autre schéma adopté dans le cadre du concept DRM (Digital Rights Management), la diffusion entre périphériques est effectuée sous forme encryptée et un programme se charge du décryptage. Les documents WO01/50225 et WO00/13412 décrivent un tel procédé: pour obtenir le droit de décrypter les données, l'utilisateur doit requérir une licence auprès du fournisseur, licence qui est accompagnée d'une clé de décryptage. Avec cette licence, l'utilisateur accède à un droit d'utilisation selon les modalités définies dans la licence, en général un droit d'accès à volonté pour un usage privé sur les différents périphériques domestiques.

De ces deux approches, l'une permet des abus de diffusion d'un contenu au delà de la sphère domestique, l'autre est trop restrictive car interdisant tout usage hors de l'unité multimédia centrale.

Le but de la présente invention est de permettre la diffusion domestique de données à accès conditionnel sans limitation au type de terminal utilisé tout en garantissant que cette diffusion ne pourra aller au-delà de la limite du lieu d'utilisation ou d'appartenance des périphériques.

Ce but est atteint par une méthode de diffusion de données encryptées entre un serveur local connecté à un ou des périphériques locaux, ce serveur local comprenant des moyens de sécurité en charge d'acquérir un premier droit d'utilisation de ces données, caractérisée en ce quelle consiste à :
- transmettre les données encryptées du serveur local vers un périphérique,
- extraire du premier droit un second droit correspondant à la partie nécessaire au décryptage des données dans les périphériques,
- encrypter par le module de sécurité le second droit par une clé d'appariement propre au couple formé par le module de sécurité du serveur local et le module de sécurité du périphérique,
- transmettre ce second droit encrypté au périphérique local,
- décrypter à l'aide de la clé d'appariement le second droit par les moyens de sécurité du périphérique,
- décrypter par le périphérique les données encryptées par le second droit.

Cette méthode se passe en deux temps. Dans un premier temps, le serveur local accède au service du fournisseur des données pour obtenir le droit d'utilisation des données. Il existe de nombreuses solutions dans ce but, par exemple, l'achat sur Internet via la carte de crédit ou la télévision à péage. En retour, le fournisseur envoie un message sous forme encryptée et contenant la clé de décryptage des données. Le droit de décryptage peut être également fourni sous la forme d'un programme de décryptage et de visualisation. Cet échange est effectué avantageusement par un protocole utilisant une clé asymétrique, permettant de s'assurer que l'on transmet le message uniquement à l'attention de cet unique utilisateur.

Ce message est transmis au module de sécurité (par exemple une carte à puce) en charge de décrypter ce message et en extraire la clé (ou le programme de décryptage). Cette clé sera utilisée pour décrypter les données pour leur utilisation sur le serveur local.

Le concept de clé peut être remplacé par le concept de logiciel d'exploitation. En effet, les données ne servent à rien sans le programme capable de les mettre en oeuvre. Dans le cas où les données représenteraient une vidéo, le logiciel d'exploitation sera le programme de visualisation.

Lors de l'utilisation des données dans un périphérique local, les données encryptées sont transférées vers ce périphérique. Selon la méthode de l'invention, ce périphérique comprend également un module de sécurité qui peut avoir plusieurs formes: il peut être constitué par une carte à puce ou un chip directement intégré dans le périphérique ou encore par une solution "software".

Les informations de contrôle telles que la clé de décryptage ou le programme de décryptage sont transmises sous forme encryptées aux divers périphériques connectés au serveur local. Cette encryption est effectuée par une clé d'appariement, c'est-à-dire une clé unique et propre au couple formé par le module de sécurité du serveur local et le module de sécurité du périphérique.

Ainsi, seul le périphérique considéré pourra reconnaître les informations de contrôle nécessaires à l'exploitation des données. Ces informations sont traitées par le module de sécurité du périphérique qui permet la visualisation de l'émission vidéo ou du jeu précédemment acquis auprès du fournisseur.

Une caractéristique de l'invention est donc de permettre l'achat sécurisé de données et son exploitation sans limite du type de périphérique considéré pour autant que ceux-ci répondent à la définition "domestique". Le droit acquis d'une manière classique est ainsi transféré à ces périphériques tout en contrôlant sa diffusion grâce à l'appariement. La méthode d'appariement est décrite dans le document WO 99/57901 et consiste à générer une clé d'encryption unique entre le module de sécurité du serveur local et le module de sécurité du périphérique lors d'une phase d'initialisation. Cette clé est mémorisée de part et d'autre et utilisée pour les transferts de données.

Cette clé d'appariement peut aussi être une clé de session générée sur demande basée sur des clés d'appariement (symétriques) ou une paire de clés (asymétriques) stockées. Ces clés d'appariement sont uniques et constantes pour l'ensemble formé par le module de sécurité du serveur local et le module de sécurité du périphérique. Lorsqu'une communication entre le serveur local et le périphérique est initialisée, la ou les clés d'appariement est utilisée soit pour encrypter et décrypter le flux de données, soit pour générer une clé de session qui est unique pour l'ensemble connecté, mais pas constante.

Si un appareil désire communiquer avec le serveur local, il doit nécessairement passer par une phase d'initialisation, phase au cours de laquelle des contrôles en terme de quantité et de type d'appareil sont effectués.

Les moyens de sécurité du serveur local sont en charge d'administrer l'appariement avec chaque périphérique. Pour éviter que tout le quartier d'un utilisateur soit considéré comme "domestique", le nombre de périphériques appariés sera limité. On peut imaginer également une limitation de type de périphérique, par exemple n'autoriser qu'un seul ordinateur personnel.

Il se peut que l'un des périphériques ne contienne pas de module de sécurité et que l'échange des droits sous forme encryptée ne peut s'effectuer. Ceci est le cas par exemple pour un terminal portable disposant d'un écran de petite taille. Dans ce cas le serveur local est autorisé à transmettre en clair les données dans une forme dégradée. Par exemple une transmission vidéo verra sa résolution réduite mais suffisante permettre au terminal portable de la visualiser avec son écran en mode faible résolution. L'interception d'une telle transmission par des tiers ne représente pas un grand danger de diffusion car le contenu n'a pas une valeur ajoutée élevée.

Dans le cas d'un contenu musical et vidéo, cette dégradation peut se faire soit qualitativement, soit quantitativement, par exemple en ne diffusant qu'une partie du contenu.

Selon un mode de réalisation de cette variante, le droit d'utilisation de ces données est différent que dans le cas où les données sont transmises encryptées. Ce droit peut être sous la forme d'une autre clé de décryptage (ou un autre logiciel de décryptage) qui n'autorise que le décryptage partiel des données, par exemple une trame sur deux pour un signal vidéo.

Dans un autre cas, le périphérique ne contient pas de module de sécurité tel que défini plus haut mais effectue les opérations de sécurité (décryptage, stockage des droits et clés) d'une manière logicielle. Ce type de périphérique peut être un téléphone portable par exemple et sera classé dans une catégorie distincte dont l'utilisation des données diffusées pourra connaître certaines restrictions.

Selon une forme particulière de l'invention, le fournisseur du contenu associe au droit transmis, une condition de diffusion. Cette condition détermine dans quelle mesure ce droit peut être transmis aux périphériques.

Selon un exemple d'utilisation de cette condition, les catégories suivantes sont prévues:
- catégorie A : aucune diffusion du droit n'est autorisée
- catégorie B : la diffusion du droit n'est autorisée que si le nombre de périphériques appariés est inférieur à un seuil b (5 par exemple)
- catégorie C : la diffusion du droit n'est autorisée que si le nombre de périphériques appariés est inférieur à un seuil c (10 par exemple)
- catégorie D : la diffusion du droit n'est autorisée que pour autant qu'il n'y ait qu'un périphérique par type de périphérique, (on empêche ainsi par exemple la diffusion sur plusieurs lecteurs MP3 ou sur plusieurs enregistreurs vidéo numériques)
- catégorie E : la diffusion en clair, même sous forme dégradée n'est pas autorisée.
- catégorie F : la diffusion n'est autorisée qu'à des périphériques contenant un module de sécurité (crypto-processeur).

Cette liste de catégorie n'est pas exhaustive et peut également être combinée. Il est possible d'intégrer la notion de nombre maximum de transmission vers les périphériques.

Ceci permet au fournisseur de déterminer la politique qu'il souhaite suivre en matière de diffusion domestique, voire de pratiquer des prix différents selon la catégorie choisie.

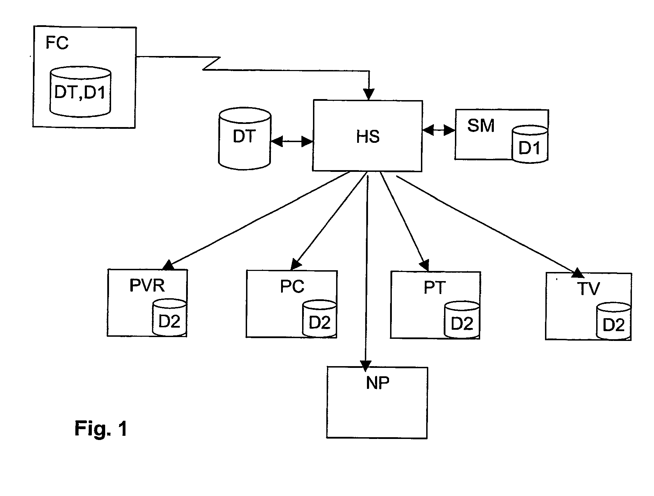

L'invention sera mieux comprise grâce à la description détaillée qui va suivre et qui se réfère au dessin annexé qui est donné à titre d'exemple nullement limitatif, et qui décrit la structure dans laquelle la méthode de l'invention se déploie.

Sur cette figure, un fournisseur de contenu FC met à disposition les données DT. Selon l'exemple représenté ici, la transmission se fait par Internet jusqu'au serveur local HS. Ce dernier stocke localement les données DT pour leur utilisation.

L'acquisition du droit d'utilisation D1 des données DT peut se faire dans le même temps que le téléchargement des données. Il peut également être effectué dans un deuxième temps, voire auprès d'un autre fournisseur. En effet, le fournisseur des données DT peut n'être qu'un intermédiaire et il est nécessaire de s'adresser au détenteur des droits pour l'acquisition du droit d'utilisation.

Une fois les procédures d'achats effectuées, le droit D1 est conservé dans le module de sécurité SM du serveur local HS. Ce droit contient des indications de l'origine des données, des conditions d'utilisation telles que décrites plus haut. Afin d'interdire tout déplacement du module de sécurité SM vers un autre serveur local HS, un mécanisme d'appariement entre le module de sécurité SM et le serveur local HS est appliqué. Le module de sécurité SM considéré ne peut plus alors que communiquer avec un serveur local, celui-là même qui a été initialisé avec le module SM.

Selon l'exemple illustré, le serveur local HS est connecté avec un enregistreur vidéo numérique PVR, un ordinateur personnel PC, un ordinateur de poche (PALM-TOP) et un téléviseur TV. Chacun des ces périphériques est apparié avec le serveur local HS et dispose donc d'une clé d'encryptage propre. Le bloc-note électronique NP ne dispose pas d'un tel module et la transmission des données DT ne se faire qu'en clair, mais dans un mode à qualité dégradée.

Lors de l'utilisation des données sur un périphérique, le serveur local HS, plus précisément le module de sécurité SM transmet le droit D2 qui représente la partie nécessaire au décryptage des données DT sur le périphérique. Ce droit est stocké dans les moyens de sécurité des périphériques.

Lorsque les données DT et le droit D2 sont dans le périphérique, il lui est possible de les utiliser dans les limites dépendant du contenu et des règles d'usage. Par exemple, un programme payé une fois peut être vu trois fois. Le droit reçu et enregistré entraîne qu'un achat de programme implique un nombre de visualisation maximal fixé à trois.

L'opération de décryptage des données DT par le périphérique peut être effectuée par le périphérique lui-même ou par les moyens de sécurité du périphérique, selon l'implémentation choisie.

Selon une variante de l'invention, les limites d'utilisation transmises par le fournisseur FC au serveur local HS, sont reportées vers le périphérique.

Lorsqu'il s'agit d'un nombre d'utilisation par périphérique, cette information contenue dans le droit D2 est traitée par le module de sécurité du périphérique.

Si le nombre d'utilisation est défini quel que soit le type de périphérique, le droit D2 contient le droit d'une utilisation, chaque nouvelle utilisation devant nécessairement être requise au module de sécurité SM du serveur local HS qui est en charge du comptage global c'est-à-dire tous périphériques confondus.

Selon une forme de l'invention, l'appariement entre le serveur local et les périphériques se fait par une clé unique commune à tous les périphériques. La clé d'appariement unique contenue dans le serveur local est transmise lors de chaque initialisation avec un nouveau périphérique.

## Revendications

1. Méthode de diffusion de données encryptées (DT) entre un serveur local (HS) connecté à un ou des périphériques locaux comprenant des moyens de sécurité, ce serveur local (HS) comprenant des moyens de sécurité (SM) en charge d'acquérir un premier droit (D1) d'utilisation de ces données (DT), **caractérisée en ce que**lle consiste à :
- transmettre les données encryptées (DT) du serveur local (HS) vers un périphérique,
- extraire du premier droit (D1) un second droit (D2) correspondant à la partie nécessaire au décryptage des données dans les périphériques,
- encrypter par le module de sécurité (SM) le second droit (D2) par une clé d'appariement propre au couple formé par le module de sécurité du serveur local et le module de sécurité du périphérique,
- transmettre ce second droit (D2) encrypté au périphérique local,
- décrypter à l'aide de la clé d'appariement le second droit (D2) par les moyens de sécurité du périphérique,
- décrypter les données encryptées (DT) reçues par le périphérique au moyen du second droit (D2) en vue de leur exploitation.

2. Méthode de diffusion de données encryptées (DT) selon la revendication 1, **caractérisée en ce que** le droit (D1, D2) est un logiciel d'exploitation de ces données (DT).

3. Méthode de diffusion de données encryptées (DT) selon la revendication 2, **caractérisée en ce que** ledit logiciel d'exploitation des données réduit la qualité de sortie desdites données.

4. Méthode de diffusion de données encryptées (DT) selon la revendication 1, **caractérisée en ce que** le droit (D1, D2) est une clé de décryptage.

5. Méthode de diffusion de données encryptées (DT) selon la revendication 4, **caractérisée en ce que** ladite clé de décryptage ne permet de décrypter que partiellement les données (DT).

6. Méthode de diffusion de données encryptées (DT) selon les revendications 1 à 5, **caractérisée en ce que** le premier droit (D1) comprend des conditions de diffusion vers les périphériques, et **en ce que** le module de sécurité du serveur local restreint la diffusion du second droit (D2) en fonction de ces conditions de diffusion.

7. Méthode de diffusion de données encryptées (DT) selon la revendication 6, **caractérisée en ce que** ces conditions contiennent des indications du type de périphériques acceptés.

8. Méthode de diffusion de données encryptées (DT) selon la revendication 6, **caractérisée en ce que** ces conditions contiennent des indications sur le niveau de sécurité des périphériques acceptés.

9. Méthode de diffusion de données encryptées (DT) selon la revendication 6, **caractérisée en ce que** ces conditions contiennent des indications du nombre maximum d'utilisation des données (DT).

## Claims

1. A method for transmitting encrypted data (DT) between a local server (HS) connected to one or several local peripherals, comprising security means, said local server (HS) comprising security means (SM) in charge of acquiring a first right (D1) of using of these data (DT), **characterised in that** it consists in:
- transmitting the encrypted data (DT) of the local server (HS) towards a peripheral,
- extracting from the first right (D1) a second right (D2) corresponding to the part necessary for the decryption of the data (DT) in the peripherals,
- encrypting by the security module (SM) the second right (D2) by means of a pairing key pertaining to the couple formed by the security module of the local server and the security module of the peripheral,
- transmitting this encrypted second right (D2) to the local peripheral,
- decrypting with the pairing key the second right (D2) by the security means of the peripheral,
- decrypting the encrypted data (DT) received by the peripheral by means of the second right (D2) with the intention of using them.

2. A method for transmitting encrypted data (DT) according to Claim 1, **characterised in that** the right (D1, D2) is an operating software of these data (DT).

3. A method for transmitting encrypted data (DT) according to Claim 2, **characterised in that** said data operating programme reduces the quality of output of said data.

4. A method for transmitting encrypted data (DT) according to Claim 1, **characterised in that** the right (D1, D2) is a decryption key.

5. A method for transmitting encrypted data (DT) according to Claim 4, **characterised in that** said decryption key allows to decrypt only partially the data (DT).

6. A method for transmitting encrypted data (DT) according to Claims 1 to 5, **characterised in that** the first right (D1) comprises conditions of transmission towards the peripherals, and **in that** the security module of the local server restrains the transmission of the second right (D2) depending on these transmission conditions.

7. A method for transmitting encrypted data (DT) according to Claim 6, **characterised in that** these conditions contain indications of the type of accepted peripherals.

8. A method for transmitting encrypted data (DT) according to Claim 6, **characterised in that** these conditions contain indications of the level of security of the accepted peripherals.

9. A method for transmitting encrypted data (DT) according to Claim 6, **characterised in that** these conditions contain indications of the maximum number of uses of the data (DT).

## Patentansprüche

1. Verfahren der Verbreitung von verschlüsselten Daten (DT) zwischen einem lokalen Server (HS) und einem oder mehreren lokalen Peripheriegeräten, die Sicherheitsmittel umfassen, wobei dieser lokale Server (HS) Sicherheitsmittel (SM) umfasst, die die Aufgabe haben, ein erstes Recht (D1) zur Nutzung dieser Daten (DT) zu erlangen, **dadurch gekennzeichnet, dass** es darin besteht:
- die verschlüsselten Daten (DT) vom lokalen Server (HS) zu einem Peripheriegerät zu übermitteln,
- aus dem ersten Recht (D1) ein zweites Recht (D2) herauszuziehen, dass dem Teil entspricht, der für die Entschlüsselung der Daten in den Peripheriegeräten nötig ist,
- das zweite Recht (D2) durch den Sicherheitsmodul (SM) mit einem Paarungsschlüssel zu verschlüsseln, der dem Paar eigen ist, das aus dem Sicherheitsmodul des lokalen Servers und dem Sicherheitsmodul des Peripheriegeräts gebildet wird,
- dieses zweite Recht (D2) verschlüsselt an das lokale Peripheriegerät zu übermitteln,
- das zweite Recht (D2) mit Hilfe des Paarungsschlüssels durch die Sicherheitsmittel des Peripheriegeräts zu entschlüsseln,
- die verschlüsselten Daten (DT), die vom Peripheriegerät empfangen werden, für ihre Nutzung mittels des zweiten Rechtes (D2) zu entschlüsseln.

2. Verfahren der Verbreitung von verschlüsselten Daten (DT) nach Anspruch 1, **dadurch gekennzeichnet, dass** das Recht (D1, D2) eine Nutzungssoftware für diese Daten (DT) ist.

3. Verfahren der Verbreitung von verschlüsselten Daten (DT) nach Anspruch 2, **dadurch gekennzeichnet, dass** die Nutzungssoftware der Daten die Ausgabequalität der Daten verringert.

4. Verfahren der Verbreitung von verschlüsselten Daten (DT) nach Anspruch 1, **dadurch gekennzeichnet, dass** das Recht (D1, D2) ein Entschlüsselungsschlüssel ist.

5. Verfahren der Verbreitung von verschlüsselten Daten (DT) nach Anspruch 4, **dadurch gekennzeichnet, dass** der Entschlüsselungsschlüssel die Daten (DT) lediglich partiell zu entschlüsseln gestattet.

6. Verfahren der Verbreitung von verschlüsselten Daten (DT) nach Ansprüchen 1 bis 5, **dadurch gekennzeichnet, dass** das erste Recht (D1) Bedingungen für die Verbreitung zu den Peripheriegeräten umfasst, und **dadurch**, dass der Sicherheitsmodul des lokalen Servers die Ausbreitung des zweiten Rechts (D2) in Abhängigkeit von diesen Ausbreitungsbedingungen beschränkt.

7. Verfahren der Verbreitung von verschlüsselten Daten (DT) nach Anspruch 6, **dadurch gekennzeichnet, dass** diese Bedingungen Hinweise bezüglich des Typs von akzeptierten Peripheriegeräten enthalten.

8. Verfahren der Verbreitung von verschlüsselten Daten (DT) nach Anspruch 6, **dadurch gekennzeichnet, dass** diese Bedingungen Hinweise bezüglich des Sicherheitsniveaus der akzeptierten Peripheriegeräte enthalten.

9. Verfahren der Verbreitung von verschlüsselten Daten (DT) nach Anspruch 6, **dadurch gekennzeichnet, dass** diese Bedingungen Hinweise auf die Höchstzahl von Nutzungen der Daten (DT) enthalten.
